# EUROPEAN PATENT SPECIFICATION

(11) **EP 2 348 691 B1**
(45) Date of publication and mention of the grant of the patent: **18.02.2015**
(21) Application number: 09823029.5
(22) Date of filing: 09.09.2009
(51) Int. Cl.: H04Q 11/00, H04L 12/46, H04L 29/06, H04L 12/28, H04J 3/08

(54) **SERVICE TRANSMISSION METHOD AND SERVICE TRANSMISSION APPARATUS**
DIENSTÜBERTRAGUNGSVERFAHREN UND DIENSTÜBERTRAGUNGSVORRICHTUNG
PROCÉDÉ DE TRANSMISSION DE SERVICE ET APPAREIL DE TRANSMISSION DE SERVICE

(30) Priority: 31.10.2008 CN 200810173271
(43) Date of publication of application: 27.07.2011
(73) Proprietor: Huawei Technologies Co., Ltd., Shenzhen, Guangdong 518129 (CN)
(72) Inventor: ZHOU, Jianlin, Guangdong 518129 (CN); ZOU, Shimin, Guangdong 518129 (CN); HU, Xing, Guangdong 518129 (CN); CAO, Yang, Guangdong 518129 (CN); CAI, Tao, Guangdong 518129 (CN); CAO, Shiyi, Guangdong 518129 (CN); ZHANG, Yi, Guangdong 518129 (CN)
(74) Representative: Isarpatent
(86) International application number: PCT/CN2009/073829
(87) International publication number: WO 2010/048837

(56) References cited:
- EP-A1- 1 890 410
- EP-A1- 2 164 221
- EP-A1- 2 315 397
- EP-A1- 2 395 682
- CN-C- 1 104 789
- "Gigabit-capable Passive Optical Networks (G-PON): Transmission convergence layer specification; G.984.3 (02/04)", ITU-T STANDARD IN FORCE (I), INTERNATIONAL TELECOMMUNICATION UNION, GENEVA, CH, no. G.984.3 (02/04), 22 February 2004 (2004-02-22), XP017401196,
- ANGELOPOULOS J D ET AL: "EFFICIENT TRANSPORT OF PACKETS WITH QOS IN AN FSAN-ALIGNED GPON", IEEE COMMUNICATIONS MAGAZINE, IEEE SERVICE CENTER, PISCATAWAY, US, vol. 42, no. 2, 1 February 2004 (2004-02-01), pages 92-98, XP001047862, ISSN: 0163-6804, DOI: 10.1109/MCOM.2003.1267106
- WEI WAND ET AL.: OPTICAL TRANSMISSION SYSTEMS, SWITCHING AND SUBSYSTEMS VIII, PROC. SPIE-OSA-IEEE ASIA COMMUNICATIONS AND PHOTONICS,, vol. 7988, 17 February 2011 (2011-02-17), pages 1-7, XP040552546, PO BOX 10 BELLINGHAM WA 98227-0010, USA DOI: 10.1117/12.888417
- WANG, PENGCHI: 'the Research of GPON Transmission Convergence Layer's Key Technologies' CHINESE MASTER'S THESES FULL-TEXT DATABASE, INFORMATION SCIENCE AND TECHNOLOGY 16 August 2008, XP008155128 & CN 119 144 A
- LAM, CEDRIC F. PASSIVE OPTICAL NETWORKS: PRINCIPLES AND PRACTICE 2007, pages 44 - 53, XP008146907

## Description

### FIELD OF THE INVENTION

The present invention relates to the field of communication technologies, and in particular, to a service transmission method and a service transmission apparatus.

### BACKGROUND OF THE INVENTION

Currently, the network bears various types of services, such as voice, video, network games, and network browsing. With the exponential increase of the network bandwidth requirements, though the operators improve the network bearing and data transmission capabilities by continuously extending the physical bandwidth and the related technology, the increase of the physical bandwidth always falls behind the requirements of users on the data transmission. Under the impact of large data quantity, various researches are carried out on how to ensure the transmission reliability of multi-services borne by the network and the Quality of Service (QoS) of the corresponding services. Meanwhile, the operators all hope to reduce the cost and increase the income, so that how to obtain maximum profits while supporting the existing services and continuously reduce the network cost is the main concern in the current network construction. How to effectively simplify the network structure and reduce the number of nodes and large offices; how to quickly subscribe to the services and reduce the required time from one month to several days, several hours, and even several minutes; and how to reduce the device investment and operation maintenance cost, and reduce the cost for a single user are all issues concerned by the operators at present. Many telecommunication operators' projects select a Gigabit Passive Optical Network (GPON) as a future solution of high-bandwidth Fiber to The x (FTTx). Thereby, higher requirements are imposed on the Metropolitan Area Network (MAN) bandwidth, and the MAN is required to have the capability of connection to the GPON, so as to support the future development of the FTTx.

The current MAN has various forms such as Next Generation Synchronous Digital Hierarchy (NG-SDH), Metro Wavelength Division Multiplexing (Metro-WDM), and Layer-2 Ethernet. However, the prior art has at least the following defects. The network structure is complex, and it is impossible to perform real-time dynamic control, so that the QoS requirements of various services are difficult to meet.

The ITU-T Recommendation G.984.2 (02/2004) discloses the specification of the Transmission convergence layer of Gigabit-capable Passive Optical Network (GPON). In the Recommendation, it has been described that the GPON Transmission convergence (GTC) layer is comprised of two sub-layers, the GTC Framing sub-layer and the Transmission convergence (TC) adaption sub-layer. SDUs (Service Data Unit) of ATM and GEM partitions are converted from/to

conventional PDUs (Protocol Data Unit) of ATM and GEM at each adaption sub-layer, respectively.

### SUMMARY OF THE INVENTION

Embodiments of the present invention provide a service transmission method and a service transmission apparatus, so as to reduce the complexity of service transmission, and perform real-time dynamic control, thereby meeting QoS requirements of various services.

The above problems are to be solved by the following technical solutions of the present invention.

An embodiment of the present invention provides a service transmission method, where the method is implemented by a node in a network and includes:
distinguishing the types of received services, and allocating a unique identification for each service;
mapping the received services of different types into uniform service adaptation layer data frames, wherein each service adaption layer data frame comprises payload length field, service identification field, frame type field, header check field, destination identification and source identification of a service, and data payload, wherein the service identification field, the destination identification and the source identification of the service together serve as unique identification in a network, in which the service locates, for the service encapsulated in the service adaptation layer data frame;
encapsulating the service adaptation layer data frames into path layer data frames;
receiving bandwidth allocation information, and obtaining the number of the path layer data frames and locations of time slots occupied by the path layer data frames;
further encapsulating the path layer data frames to obtain physical layer data frames according to the number of the path layer data frames and the locations of the time slots occupied by the path layer data frames, wherein each of the physical layer data frames comprises a physical layer overhead and a data area which is formed by a plurality of path layer data frames; and
terminating or regenerating overheads of the physical layer data frames, and transmitting the physical layer data frames.

Another embodiment of the present invention provides a service transmission apparatus, where the apparatus includes:
a tributary unit, configured to distinguish the types of received services, allocate a unique identification for each service, map the received services of different types into uniform service adaptation layer data frames, and encapsulate the service adaptation layer data frames into path layer data frames, wherein each service adaptation layer data frame comprises payload length field, service identification field, frame type field, header check field, destination identification and source identification of a service, and data payload, wherein the service identification field, the destination identification and the source identification together serve as unique identification in a network, in which the service locates, for the service encapsulated in the service adaptation layer data frame;
a cross unit, including a Transmission Container (T-CONT) high-order cross unit configured to perform crossing, passing through, broadcasting, or multicasting on the path layer data frames; and
a line unit, configured to obtain the number of the path layer data frames and locations of time slots occupied by the path layer data frames according to the received bandwidth allocation information, encapsulate the path layer data frames into physical layer data frames according to the number of the path layer data frames and the locations of the time slots occupied by the path layer data frames, terminate or regenerate overheads of the physical layer data frames, and transmit the physical layer data frames, wherein each of the physical layer data frames comprises a physical layer overhead and a data frames which is formed by a plurality of path layer data frames.

An embodiment of the present invention further provides a service transmission system, where the system includes:
a first node device with a preset number, a second node device with a preset number, a service terminal corresponding to the first node device, and a network host, where the first node device and the second node device both include the service transmission apparatus described above.

The first node device is configured to detect and count the bandwidth of the local services, transmit banwidth request information to the second node device, and according to the allocated bandwidth, perform service interaction with the service terminal that is connected with the first node device.

The second node device is further configured to perform service interaction with an upper layer network, besides having the functions of the first node device.

The service terminal is configured to perform service interaction with the node devices that are connected with the service terminal.

The network host is configured to manage and control the first node device and the second node device.

It can be seen from the above technical solutions that, service adaptation is performed on various services through the service adaptation layer, so that the services directly enter the path layer and then directly enter the line through the path layer, thus simplifying the intermediate process and reducing the complexity of service transmission, and the bandwidth allocation information is calculated through a Dynamic Bandwidth Allocation (DBA) unit, so as to perform the dynamic bandwidth adjustment and meet the QoS requirements of the services.

### DETAILED DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.
FIG. 1 is a view of a hierarchical network model according to an embodiment of the present invention;
FIG. 2 is a flow chart of a method according to an embodiment of the present invention;
FIG. 3 is a schematic structural view of an apparatus according to an embodiment of the present invention; and
FIG. 4 is a schematic structural view of a system according to an embodiment of the present invention.

### DETAILED DESCRIPTION OF THE EMBODIMENTS

The technical solutions of the present invention will be clearly described in the following with reference to the accompanying drawings. It is obvious that the embodiments to be described are only some rather than all of the embodiments of the present invention. All other embodiments obtained by persons of ordinary skill in the art based on the embodiments of the present invention without creative efforts shall fall within the protection scope of the present invention. The embodiments of the present invention provide a service transmission method, a service transmission apparatus, and a service transmission system.

The method flow of the present invention will be described in detail below with reference to the accompanying drawings.

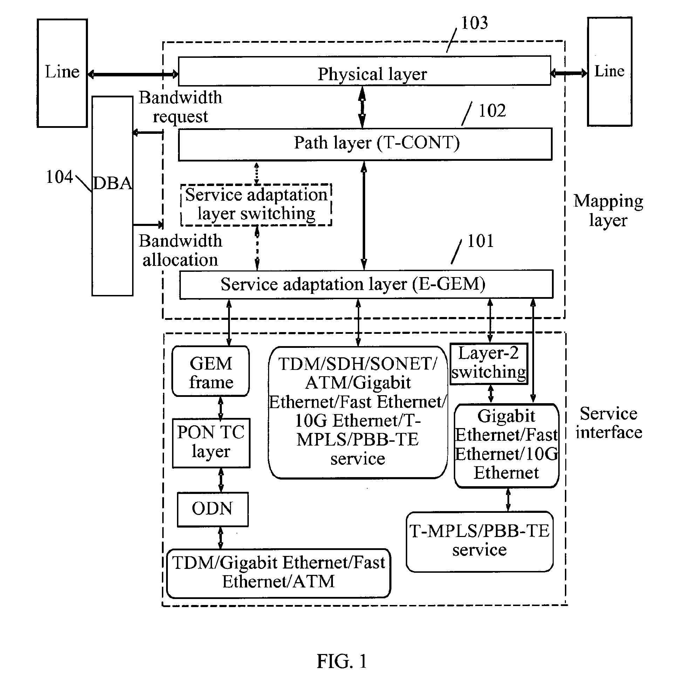

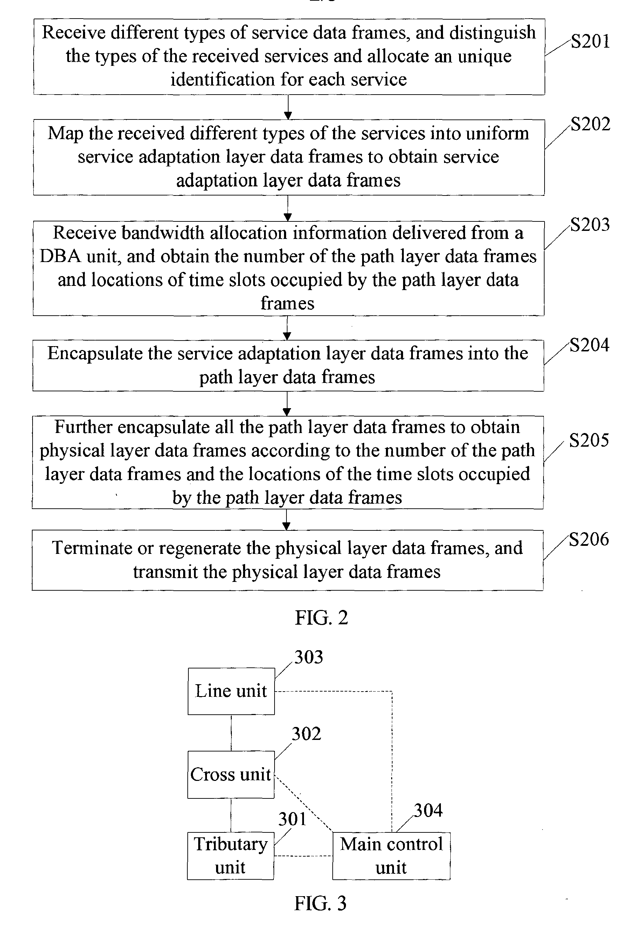

FIG. 1 is a view of a hierarchical network model according to an embodiment of the present invention, including a service adaptation layer 101, a path layer 102, and a physical layer 103. On the basis of the network model shown in FIG. 1, a flow chart of the method according to this embodiment is as shown in FIG. 2, where the method includes the following steps.

In S201, different types of services are received, the types of the received services are distinguished, and a unique identification is allocated for each service.

The services include: a GPON service, a Time Division Multiplex (TDM) service, a Synchronous Digital Hierarchy (SDH) service/Synchronous Optical Networking (SONET) service, Asynchronous Transfer Mode (ATM) service, and an Ethernet data service. The Ethernet data service may be optionally transmitted to the service adaptation layer 101 shown in FIG. 1 after Layer-2 switching. Besides these common service types, a Transport-Multi-protocol Label Switching (T-MPLS) service for packet transmission or a Provider Backbone Bridge-Traffic Engineering (PBB-TE) service may be encapsulated into an Ethernet data frame, and then it is selected whether to transmit the frame to the service adaptation layer 101 shown in FIG. 1 after the Layer-2 switching.

The service encapsulation method is an Enhanced-GPON Encapsulation Method (E-GEM), and is called a "service adaptation layer data frame". Each service after encapsulation corresponds to one E-GEM, and "destination identification" and "source identification" of the service are added in the E-GEM relative to the GEM in a GPON system. Compared with the "service identification" in the GPON system, the "service identification" in the E-GEM frame may exist in the E-GEM of any node on a ring, and the "service identification", the "destination identification", and the "source identification" together serve as unique service identification in the network in which the service locates, thus facilitating the tracking, deployment, and management of the services, preventing the GEM in the GPON system from being merely used in an access layer, and avoiding point-to-multipoint limitation.

In S202, the received different types of services are mapped into uniform service adaptation layer data frames, and the service adaptation layer data frames are obtained.

Specifically, the GPON service reaches the current node through an Optical Distribution Network (ODN), and is decapsulated from the physical layer into a Transmission Convergence (TC) layer of a Passive Optical Network (PON), then decapsulated into a GEM frame, and finally mapped into the E-GEM. The GEM frame of the GPON is considered as a client signal in the embodiment of the present invention herein. The TDM service, the SDH/SONET service, ATM service, and the Ethernet data service are directly mapped into the E-GEM. The T-MPLS/PBB-TE service, used as a client signal of the Ethernet system, is first mapped into the Ethernet data frame, and then it is selected whether to map the frame into the E-GEM after Layer-2 switching.

The service adaptation layer data frame includes a frame header and a data area. The frame header includes four fields: payload length, service identification, frame type, and header check. The data area includes destination identification and source identification of the service, and data payload. The "payload length" refers to the length of the data payload with byte as the unit, and when the destination identification and the source identification are set in fixed byte count length, the frame trailer of the E-GEM may be determined through the payload length. The "service identification" is the identification of the service in a network node, for example, the identification may correspond to a specific service type or a physical port. The "frame type" refers to an intermediate frame or a trailer frame when a data packets having ultra-long data length are required to be partitioned into several fragments, each of which is encapsulated into an E-GEM.. The "header check" means that Cyclic Redundancy Check (CRC) is performed on the data in the fields of the frame header, so as to position the initial location of the E-GEM.

In S203, the bandwidth allocation information delivered from the DBA unit 104 shown in FIG. 1 is received to obtain the number of the path layer data frames and locations of time slots occupied by the path layer data frames.

Specifically, each node in the network checks, counts, and reports bandwidth request information of various service ports in the current node to the DBA unit 104. The DBA unit 104 judges and calculates, according to existing bandwidth resources in the network, and the service type and priority of each node, and then delivers the bandwidth allocation information of each node to the corresponding node. Afterwards, each node transmits the data according to the allocated bandwidth. The bandwidth allocation information delivered to each node is mainly a bandwidth (BW) map, and each node encapsulates the path layer data frames (T-CONT) according to the BW map and determines the locations of the time slots occupied by the T-CONT.

The DBA unit 104 may exist in a network host or in a network node.

In S204, the service adaptation layer data frames are encapsulated into path layer data frames.

Specifically, the service adaptation layer data frame is classified according to the service type, the destination address, and the priority principle of the service adaptation layer data frame, and the service adaptation layer data frames having the same service type and/or the same destination address and/or the same priority are encapsulated into a path layer data frame.

The service type of the service adaptation layer data frame may be further classified into various types such as a Fixed Bandwidth (FB) type, an Assured Bandwidth (AB) type, and a Best Effort (BE) type, so as to meet the QoS requirements of the services with different service types and different priorities. For example, the TDM service, the SDH/SONET service, and a private line service are classified as the FB service; an on-demand service is classified as the AB service; and a common internet service such as network browsing is classified as the BE service. Correspondingly, the path layer data frame obtained after the encapsulation of the service adaptation layer data frames according to the type of the service borne by the service adaptation layer includes an FB data frame, an AB data frame, and a BE data frame.

The path layer data frame includes a path layer overhead and a data area. The path layer overhead includes frame synchronism, path identification, and a path overhead. The data area is formed by a plurality of E-GEMs. The "frame synchronism" may be a frame delimiter, or a header and a check form of the header, and is applicable to an asynchronous network. The "path identification" is the identification of the T-CONT, and is uniformly allocated according to the T-CONT of all the nodes in the network. The "path overhead" includes Bit Interleaved Parity (BIP) and an indication of defect and performance, and end-to-end warning and performance monitoring of the path may be implemented through the path overhead.

In S205, all the path layer data frames are further encapsulated to obtain physical layer data frames according to the number of the path layer data frames and the locations of the time slots occupied by the path layer data frames. The physical layer data frame includes a physical layer overhead and a data area. The physical layer overhead includes physical layer frame synchronism, a physical layer management overhead, and a BW map indication. The "physical layer frame synchronism" is defined as a frame delimiter, the "physical layer management overhead" includes BIP check, a signaling path, a protection switching protocol byte, and an indication of defect and performance, so as to facilitate the communication and management, protection and switching, and fault warning and performance monitoring of each node in the network. The "BW map" is configured to indicate the number of the path layer data frames (T-CONTs) in the data area and the locations of the time slots occupied by the T-CONTs. The data area of the physical layer data frame is formed by a plurality of path layer data frames (T-CONTs), and the number of the path layer data frames and the locations of the time slots occupied by the path layer data frames are obtained through S203. For example, in a fixed frame frequency, fixed period, and serial data frame structure, the location of the time slot of each path layer data frame may select to use the byte as its unit, and is assigned with a start location and an end location of each path layer data frame. In the BW map delivered from the DBA unit, the start locations and the end locations of all the path layer data frames are included, and thus the start location and the end location of the path layer data frame in each node may be adjusted through the bandwidth requirement of each node in the network, so that the time slot allocated for each T-CONT can be adjusted to achieve dynamic bandwidth adjustment.

In S206, the overheads of the physical layer data frames are terminated or regenerated, and the physical layer data frames are transmitted. For example, in the receiving direction, a received optical signal is converted into an electrical signal, and the overhead is read from an overhead part of the physical layer data frame header and is processed, so as to obtain signaling, implement fault and performance monitoring, and obtain the BW map. In the transmission direction, the overhead data is written into the overhead part of the physical layer data frame header, so as to form a complete physical layer data frame which is converted from the electrical signal to the optical signal and is transmitted through an optical fiber.

In this embodiment, S203 may be implemented before or after S201, S202, or S204.

It can be seen from this embodiment that, the services in this solution are adapted through the E-GEM service, directly enter the path layer T-CONT, and then directly enter the line from the path layer. Only the three-layer process is performed, thereby simplifying the intermediate process, so that the implementation is simple and the cost is saved.

In another embodiment of the present invention, between the above S204 and S205, the method further includes the following steps.

Crossing, passing through, broadcasting, or multicasting is performed on the path layer data frame at the current node, and the service adaptation layer data frame is dropped and added. At this time, the path layer 102 shown in FIG. 1 has a single-level cross structure of "T-CONT crossing". For example, through the single-level cross structure of the "T-CONT crossing", the services required to be switched between the tributary units of the local node form a T-CONT frame in a source tributary unit, and then return to a destination tributary unit through a crossing process.

In another embodiment of the present invention, between the above S202 and S203, the method further includes the following steps.

Local service switching is performed on the service adaptation layer data frames in the current node. Specifically, according to the "destination identification" and the "source identification" in the service adaptation layer data frame, if the destination identification and the source identification are both the "node identification" of the current node, while only the service ports are different, the source and the destination of the service are both in the current node, and only need to be switched between the different service ports in the current node. At this time, the path layer shown in FIG. 1 has a two-level structure of "T-CONT high-order crossing" + "E-GEM low-order crossing". For example, according to the "node identification" and the "service identification" in the E-GEM frame, the local switching process is perform on the services to be switched locally, the rest of the services form a T-CONT frame, and the crossing process is performed on the T-CONT frame.

Between the above S204 and S205, the method further includes the following steps.

In another embodiment of the present invention, under the control of the DBA unit, bandwidth of the path layer data frame is adjusted according to the type of the service borne by the path layer data frame. The type of the service borne by the path layer data frame may be classified into an FB service, an AB service, and a BE service. Specifically, the DBA unit 104 receives bandwidth request information of each network node, judges and calculates bandwidth allocation information (BW map) for each node according to the existing bandwidth resources in the network, and the type and priority of the service borne by each T-CONT, or the service type, or the priority, and delivers the bandwidth allocation information (BW map) of each node to the corresponding node. The number, length, and specific locations of the time slots of the T-CONT framing, and the T-CONT crossing in each node all depend on the bandwidth allocation information. Specially, the priority of the T-CONT framing is successively the FB service, the AB service, and the BE service according to the service type, which ensures that the T-CONT with high priority is preferentially allocated with the bandwidth and transmitted, and the T-CONT with low priority continues to be allocated in the remaining bandwidth, thus achieving the fairness of the bandwidth allocation and the QoS of different levels.

FIG. 3 is a schematic structural view of an apparatus according to an embodiment of the present invention. The service transmission apparatus according to this embodiment may be configured to implement the above service transmission method, and includes a tributary unit 301, a cross unit 302, and a line unit 303.

The tributary unit 301 is configured to map received different types of services into uniform service adaptation layer data frames, and encapsulate the service adaptation layer data frames into a path layer data frame based on principles such as the same service type and/or the same destination address and/or the same priority.

The service type of the service adaptation layer data frame includes an FB service, an AB service, and a BE service. For example, a TDM service, an SDH/SONET service, and a private line service are classified as the FB service; an on-demand service and the leased line service are classified as the AB service; and a network browsing service is classified as the BE service. Correspondingly, the path layer data frame obtained after the encapsulation of the service adaptation layer data frames according to the service type includes an FB data frame, an AB data frame, and a BE data frame.

The cross unit 302 includes a T-CONT high-order cross unit configured to perform crossing, passing through, broadcasting, or multicasting on the path layer data frames according to a received BW map.

The line unit 303 is configured to obtain the number of the path layer data frames and locations of time slots occupied by the path layer data frames according to the received bandwidth allocation information; and encapsulate the path layer data frames into physical layer data frames according to the number of the path layer data frames and the locations of the time slots occupied by the path layer data frames, terminate or regenerate overheads of the physical layer data frames, and transmit the physical layer data frames.

The tributary unit 301 includes a GPON tributary interface, a TDM service and Ethernet service interface, and an interface for transmitting other data services.
(1) The GPON tributary interface is configured to receive a PON service. The services are accessed in an Optical Network Unit (ONU), and reach an ODN interface and a PON TC module built in the network node through an ODN, and then a GPON signal is decapsulated into a T-CONT layer from a GPON Transmission Convergence (GTC) layer and is further decapsulated into a GEM frame. The GEM frame is considered as a client signal of the service adaptation layer 101 herein, and the services do not need to be dropped and are directly encapsulated into an E-GEM through the service adaptation layer. This service mapping procedure may be compatible with the existing ODN network and the ONU device of the GPON system, which guarantees the new network structure to support the future FTTx development and the GPON interconnection.
(2) The TDM service and Ethernet service interface is configured to encapsulate various types of services such as the TDM service and the Ethernet service, so as to ensure uniform bearing. As for other services with a continuous code stream or a fixed rate, and the SDH/SONET service, ATM service, reference is made to the TDM service mapping method. As for other types of packet services such as the T-MPLS service, PBB-TE service, reference is made to the Ethernet service mapping method.
(3) The interface for transmitting other data services is configured to use the T-MPLS/PBB-TE as a client signal of the Ethernet system and encapsulate the client signal into an Ethernet data frame first, and then it is selected whether Layer-2 switching is performed to enter the E-GEM.

It should be understood that, in the specific implementation process, the tributary unit 301, the cross unit 302, and the line unit 303 may be connected to a main control unit 304, and the main control unit 304 is configured to perform signaling transmission between the units that are connected with the main control unit, and process and report various faults and performance monitoring results to the network host. Optionally, the main control unit 304 is further configured to terminate or regenerate the overheads in the service adaptation layer data frame, the path layer data frame, and the physical layer data frame.

In this embodiment, the tributary unit 301 maps the received services into uniform service adaptation layer data frames through an E-GEM framing unit, and encapsulates the service adaptation layer data frames into a path layer data frame based on principles such as the same type and/or the same destination address and/or the same priority through a T-CONT framing unit.

The cross unit 302 performs crossing, passing through, broadcasting, or multicasting on the path layer data frames obtained by the T-CONT framing unit through the T-CONT high-order cross unit in the current node. The line unit 303 further encapsulates the different types of the path layer data frames to obtain physical layer data frames, terminates or regenerates the overheads of the physical layer data frames, and transmits the physical layer data frames.

In another embodiment of the present invention, the apparatus further includes a low-order cross unit.

The low-order cross unit is located in the tributary unit or in the cross unit, and is configured to perform local switching on the service adaptation layer data frames in the current node, form the rest of the services after the local switching into a T-CONT frame, and transmit the frame to the T-CONT high-order cross unit.

In another embodiment of the present invention, the apparatus further includes an identification unit.

The identification unit is configured to distinguish the type of the service received by the tributary unit 301, and allocate a unique identification for each service. The identification unit may be integrated with the tributary unit, so as to facilitate the deployment, tracking, management, and dispatch of the services in all the networks.

In still another embodiment of the present invention, the apparatus further includes a DBA unit.

The DBA unit is configured to receive the bandwidth request information reported by each network node, determine and calculate bandwidth allocation information of each node according to existing bandwidth resources, and the type of the service borne by each T-CONT, and/or the destination address and/or the priority, and deliver bandwidth allocation information (BW map) of each node in an in-band mode to the corresponding node. Each node performs T-CONT decapsulating, T-CONT crossing, and T-CONT framing on the physical layer data according to the BW map delivered in the associated mode. Since the BW map contains a start location and an end location of each T-CONT in the physical layer data frames, the allocation time slot of each T-CONT may be conveniently adjusted by adjusting the start location and the end location according to the bandwidth requirement of each node, thus achieving the dynamic bandwidth adjustment.

The DBA unit may exist in the network host, or in a main node device (the second node device hereinafter).

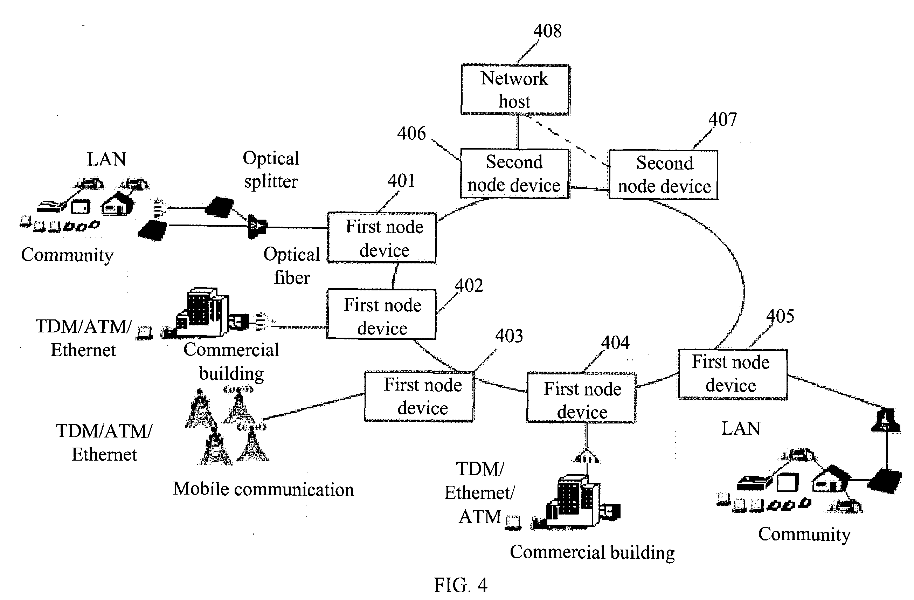

FIG. 4 is a schematic structural view of a system according to an embodiment of the present invention, where the system includes: a first node device with a preset number, a second node device with a preset number, a service terminal corresponding to the first node device, and a network host.

The service terminal is configured to perform service interaction with the node devices that are connected with the service terminal.

The first node device is, for example, a common service access node, and is configured to detect and count the bandwidth of the local services, transmit bandwidth request information to a second node device, and, according to the allocated bandwidth, perform service interaction with the service terminal that is connected with the first node device. The service type connected to the service port includes: (1) a fixed bandwidth service, referred to as an "FB service", and configured to bear a service with strictly ensured bandwidth and delay, such as a TMD, a GPON service, aSDH/SONET service, and a private line service; (2) an assured bandwidth type, referred to as an "AB service", such as video on-demand and the private line service; and (3) a best effort service, referred to as a "BE service", such as network browsing and other internet services.

The first node device includes a cross unit, configured to perform crossing, passing through, broadcasting, multicasting, and service down-dropping or up-inserting on path layer data frames in the current node. Optionally, local switching is performed on the service adaptation layer data frames in the current node. The first node device includes the apparatus with the structure shown in FIG. 3.

The second node device is also a node device interconnected with an upper layer network, and is further configured to perform service interaction with the upper layer network, besides having the functions of the first node device. For example, an uplink service interface of 10 GE/GE is configured to transmit services with the upper layer network.

As for the AB and BE services, the network is a convergence network, and the convergence node is the second node device. The second node device is further configured to receive bandwidth request information transmitted from each first node device in the network, and transmit the bandwidth request information to a DBA unit, besides having various service access functions of the first node device. The DBA unit may be located in the second node device or in the network host. For example, the DBA unit is located in the network host 408, and the second node device 406 receives bandwidth request information transmitted from the first node device 401, the first node device 402, the first node device 403, the first node device 404, and the first node device 405, and transmits the bandwidth request information to the network host 408 connected to the second node device 406. In such convergence network, in consideration of the importance of the second node device, double backups may be optionally implemented for the second node device, for example, the second node device 407 and the second node device 406 are complementary backups with each other.

The network host is configured to manage and control the first node device and the second node device. If the DBA unit is located in the network host, in the network host, the DBA unit is configured to receive the bandwidth request information of each node collected and transmitted from the second node device, and allocate the bandwidth to each node according to the existing bandwidth resources in the network, and the service type and the priority of each node.

As for the FB service, the network is an equivalent switching network, and services such as the TDM, SDH/SONET, and private line services can be transmitted between any two node devices.

It can be seen from the above embodiments that, various services in this solution are adapted through the E-GEM service, directly enter the path layer T-CONT, and then directly enter the line from the path layer. Only three layers of structures are needed, and the intermediate process is simplified, so that the implementation is simple and the cost is saved. On the basis of the DBA algorithm, the dynamic bandwidth adjustment may be implemented and the bandwidth utilization is high. On the basis of the time slot crossing and transmission, the clock transparent transmission performance is desirable, and the delay is fixed with no jitter. The QoS requirement is met by setting different T-CONT types.

Persons of ordinary skill in the art should understand that all or a part of the steps of the method according to the embodiments of the present invention may be implemented by a program instructing relevant hardware. The program may be stored in a computer readable storage medium.

The storage medium may be a magnetic disk, an optical disk, a Read-Only Memory (ROM), or a Random Access Memory (RAM).

The service transmission method, the service transmission apparatus, and the service transmission system are described in detail above. The principle and implementation of the present invention are described herein through specific examples. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as a limit to the present invention.

## Claims

1. A service transmission method, which is implemented by a node in a network, comprising:
distinguishing (S201) the types of received services, and allocating a unique identification for each service;
mapping (S202) the received services of different types into uniform service adaptation layer data frames, wherein each service adaptation layer data frame comprises payload length field, service identification field, frame type field, header check field, destination identification and source identification of a service, and data payload, wherein the service identification field, the destination identification and the source identification of the service together serve as unique identification in the network, in which the service locates, for the service encapsulated in the service adaptation layer data frame;
encapsulating (S204) the service adaptation layer data frames into path layer data frames;
receiving bandwidth allocation information, and obtaining the number of the path layer data frames and locations of time slots occupied by the path layer data frames;
further encapsulating (S205) the path layer data frames to obtain physical layer data frames according to the number of the path layer data frames and the locations of the time slots occupied by the path layer data frames, wherein each of the physical layer data frames comprises a physical layer overhead and a data area which is formed by a plurality of path layer data frames; and
terminating or regenerating (S206) overheads of the physical layer data frames, and transmitting (S206) the physical layer data frames.

2. The method according to claim 1, wherein the encapsulating (S204) the service adaptation layer data frames into the path layer data frames comprises:
encapsulating the service adaptation layer data frames with the same service type and/or the same destination address and/or the same priority into a path layer data frame.

3. The method according to claim 2, wherein the service type of the service adaptation layer data frame comprises: a Fixed Bandwidth, FB, service, an Assured Bandwidth, AB, service, and a Best Effort, BE, service; and
correspondingly, the path layer data frame obtained after the encapsulation of the service adaptation layer data frames of the same service type comprises: an FB data frame, an AB data frame, and a BE data frame.

4. The method according to claim 1, wherein before the further encapsulating (S205) the path layer data frames to obtain the physical layer data frames according to the number of the path layer data frames and the locations of the time slots occupied by the path layer data frames, the method further comprises:
performing crossing, passing through, broadcasting, or multicasting on the path layer data frames at current node, and dropping or adding the service adaptation layer data frames; and/or
performing local switching on the service adaptation layer data frames in the node.

5. A service transmission apparatus, comprising:
a tributary unit (301), configured to distinguish the types of received services, allocate a unique identification for each service, map the received services of different types into uniform service adaptation layer data frames, and encapsulate the service adaptation layer data frames into path layer data frames, wherein each service adaptation layer data frame comprises payload length field, service identification field, frame type field, header check field, destination identification and source identification of a service, and data payload, wherein the service identification field, the destination identification and the source identification of the service together serve as unique identification in a network, in which the service locates, for the service encapsulated in the service adaptation layer data frame ;
a cross unit (302), comprising a Transmission Container ,T-CONT, high-order cross unit configured to perform crossing, passing through, broadcasting, or multicasting on the path layer data frames; and
a line unit (303), configured to obtain the number of the path layer data frames and the locations of the time slots occupied by the path layer data frames according to received bandwidth allocation information; and encapsulate the path layer data frames into physical layer data frames according to the number of the path layer data frames and the locations of the time slots occupied by the path layer data frames, terminate or regenerate overheads of the physical layer data frames, and transmit the physical layer data frames, wherein each of the physical layer data frames comprises a physical layer overhead and a data frames which is formed by a plurality of path layer data frames.

6. The apparatus according to claim 5, further comprising:
a low-order cross unit, located in the tributary unit (301) or in the cross unit (302), and configured to perform local switching on the service adaptation layer data frames in the apparatus.

7. The apparatus according to claim 5, further comprising:
a Dynamic Bandwidth Allocation, DBA, unit, configured to receive a reported bandwidth request, and adjust bandwidth of the path layer data frames according to the service type and/or the priority of the service borne by the path layer data frames.

8. The apparatus according to claim 5, wherein the tributary unit (301) further comprises:
a passive optical network, PON, tributary interface, configured to receive a PON service; and
an uplink service interface, configured to perform service transmission with an upper layer network.

## Patentansprüche

1. Dienstübertragungsverfahren, das durch einen Knoten in einem Netzwerk ausgeführt wird, das die folgenden Schritte aufweist:
Unterscheiden (S201) der Typen von empfangenen Diensten und Zuweisen einer eindeutigen Identifikation für jeden Dienst;
Abbilden (S202) der empfangenen Dienste unterschiedlicher Typen in einheitliche Dienstanpassungsschicht-Datenrahmen, wobei jeder Dienstanpassungsschicht-Datenrahmen ein Nutzdatenlängenfeld, ein Dienstidentifikationsfeld, ein Rahmentypfeld, ein Dateikopfprüffeld, eine Zielidentifikation und eine Ursprungsidentifikation eines Dienstes und Nutzdaten aufweist, wobei das Dienstidentifikationsfeld, die Zielidentifikation und die Ursprungsidentifikation des Dienstes zusammen als eindeutige Identifikation im Netzwerk, in dem sich der Dienst befindet, für den Dienst dienen, der in den Dienstanpassungsschicht-Datenrahmen eingekapselt ist;
Einkapseln (S204) der Dienstanpassungsschicht-Datenrahmen in Wegschichtdatenrahmen;
Empfangen von Bandbreitenzuweisungsinformationen und Erhalten der Anzahl der Wegschichtdatenrahmen und Orte von Zeitschlitzen, die durch die Wegschichtdatenrahmen belegt werden;
weiteres Einkapseln (S205) der Wegschichtdatenrahmen, um Datenrahmen der Bitübertragungsschicht gemäß der Anzahl der Wegschichtdatenrahmen und der Orte der Zeitschlitze zu erhalten, die durch die Wegschichtdatenrahmen belegt werden, wobei jeder der Datenrahmen der Bitübertragungsschicht Verwaltungsdaten der Bitübertragungsschicht und einen Datenbereich aufweist, der durch mehrere Wegschichtdatenrahmen gebildet wird; und Abschließen oder Regenerieren (S206) der Verwaltungsdaten der Datenrahmen der Bitübertragungsschicht und Übertragen (S206) der Datenrahmen der Bitübertragungsschicht.

2. Verfahren nach Anspruch 1, wobei das Einkapseln (S204) der Dienstanpassungsschicht-Datenrahmen in die Wegschichtdatenrahmen aufweist:
Einkapseln der Dienstanpassungsschicht-Datenrahmen mit demselben Diensttyp und/oder derselben Zieladresse und/oder derselben Priorität in einen Wegschichtdatenrahmen.

3. Verfahren nach Anspruch 2, wobei der Diensttyp des Dienstanpassungsschicht-Datenrahmens aufweist: einen Dienst mit fester Bandbreite (Fixed Bandwith service, FB-Dienst), einen Dienst mit zugesicherter Bandbreite (Assured Bandwith service, AB-Dienst), und einen "Best Effort"-Dienst, BE-Dienst; und entsprechend der Wegschichtdatenrahmen, der nach der Einkapselung der Dienstanpassungsschicht-Datenrahmen desselben Diensttyps erhalten wird, aufweist:
einen FB-Datenrahmen, einen AB-Datenrahmen und einen BE-Datenrahmen.

4. Verfahren nach Anspruch 1, wobei vor dem weiteren Einkapseln (S205) der Wegschichtdatenrahmen, um die Datenrahmen der Bitübertragungsschicht gemäß der Anzahl der Wegschichtdatenrahmen und der Orte der Zeitschlitze zu erhalten, die durch die Wegschichtdatenrahmen belegt werden, das Verfahren ferner aufweist:
Durchführen einer Kreuzung, einer Durchleitung, eines Broadcastings oder Multicastings an den Wegschichtdatenrahmen am gegenwärtigen Knoten, und Abwerfen oder Hinzufügen der Dienstanpassungsschicht-Datenrahmen; und/oder Durchführen einer lokalen Vermittlung an den Dienstanpassungsschicht-Datenrahmen im Knoten.

5. Dienstübertragungsvorrichtung, die Folgendes aufweist:
eine Trabanteneinheit (301), die konfiguriert ist, die Typen empfangener Dienste zu unterscheiden, für jeden Dienst eine eindeutige Identifikation zuzuweisen, die empfangenen Dienste unterschiedlicher Typen in einheitliche Dienstanpassungsschicht-Datenrahmen abzubilden, und die Dienstanpassungsschicht-Datenrahmen in Wegschichtdatenrahmen einzukapseln, wobei jeder Dienstanpassungsschicht-Datenrahmen ein Nutzdatenlängenfeld, ein Dienstidentifikationsfeld, ein Rahmentypfeld, ein Dateikopfprüffeld, eine Zielidentifikation und Ursprungsidentifikation eines Dienstes und Nutzdaten aufweist, wobei das Dienstidentifikationsfeld, die Zielidentifikation und die Ursprungsidentifikation des Dienstes zusammen als eindeutige Identifikation in einem Netzwerk, in dem sich der Dienst befindet, für den Dienst dienen, der in den Dienstanpassungsschicht-Datenrahmen eingekapselt ist;
eine Kreuzeinheit (302), die eine Übertragungscontainer-Kreuzeinheit (Transmission Container cross unit, T-CONT-Kreuzeinheit) höherer Ordnung aufweist, die konfiguriert ist, eine Kreuzung, eine Durchleitung, ein Broadcasting oder Multicasting an den Wegschichtdatenrahmen durchzuführen; und
eine Leitungseinheit (303), die konfiguriert ist, die Anzahl der Wegschichtdatenrahmen und die Orte der Zeitschlitze, die durch die Wegschichtdatenrahmen belegt werden, gemäß den empfangenen Bandbreitenzuweisungsinformationen zu erhalten; und die Wegschichtdatenrahmen in Datenrahmen der Bitübertragungsschicht gemäß der Anzahl der Wegschichtdatenrahmen und der Orte der Zeitschlitze einzukapseln, die durch die Wegschichtdatenrahmen belegt werden, Verwaltungsdaten der Datenrahmen der Bitübertragungsschicht abzuschließen oder zu regenerieren, und die Datenrahmen der Bitübertragungsschicht zu übertragen, wobei jeder der Datenrahmen der Bitübertragungsschicht Verwaltungsdaten der Bitübertragungsschicht und einen Datenrahmen aufweist, der durch mehrere Wegschichtdatenrahmen gebildet wird.

6. Vorrichtung nach Anspruch 5, die ferner aufweist:
eine Kreuzeinheit niedrigerer Ordnung, die sich in der Trabanteneinheit (301) oder in der Kreuzeinheit (302) befindet und die konfiguriert ist, eine lokale Vermittlung an den Dienstanpassungsschicht-Datenrahmen in der Vorrichtung durchzuführen.

7. Vorrichtung nach Anspruch 5, die ferner aufweist:
eine Einheit zur dynamischen Bandbreitenzuweisung (Dynamic Bandwith Allocation unit, DBA-Einheit), die konfiguriert ist, eine mitgeteilte Bandbreitenanforderung zu empfangen und die Bandbreite der Wegschichtdatenrahmen gemäß dem Diensttyp und/oder der Priorität des Dienstes einzustellen, der durch die Wegschichtdatenrahmen getragen wird.

8. Vorrichtung nach Anspruch 5, wobei die Trabanteneinheit (301) ferner aufweist:
eine Trabantenschnittstelle für ein passives optisches Netzwerk, PON, die konfiguriert ist, einen PON-Dienst zu empfangen; und
eine Aufwärtsstrecken-Dienstschnittstelle, die konfiguriert ist, eine Dienstübertragung mit einem Netzwerk der oberen Schicht durchzuführen.

## Revendications

1. Procédé de transmission de service qui est mis en oeuvre par un noeud dans un réseau, comprenant :
la distinction (S201) des types de services reçus et l'affectation d'une identification unique pour chaque service,
le mappage (S202) des services reçus de différents types en des trames de données de couche d'adaptation de service uniformes, chaque trame de données de couche d'adaptation de service comprenant un champ de longueur de charge utile, un champ d'identification de service, un champ de type trame, un champ de contrôle d'en-tête, une identification de destination et une identification de source d'un service, ainsi que la charge utile des données, le champ d'identification de service, l'identification de destination et l'identification de source du service servant ensemble comme identification unique dans le réseau dans lequel se situe le service, pour le service intégré dans la trame de données de couche d'adaptation de service,
l'encapsulation (S204) des trames de données de couche d'adaptation de service dans des trames de données de couches de trajets,
la réception d'informations sur l'allocation de bande passante et la récupération du nombre de trames de données de couches de trajets et d'emplacements de tranches de temps occupées par les trames de données de couches de trajets,
l'encapsulation supplémentaire (S205) des trames de données de couches de trajets pour obtenir des trames de données de couche physique en fonction du nombre de trames de données de couches de trajets et des emplacements des tranches de temps occupées par les trames de données de couches de trajets, chacune des trames de données de couche physique comprenant une charge de service de couche physique et une zone de données qui est formée par une pluralité de trames de données de couches de trajets, et
la fin ou la régénération (S206) des charges de service des trames de données de couche physique et la transmission (S206) des trames de données de couche physique.

2. Procédé selon la revendication 1, dans lequel l'encapsulation (S204) des trames de données de couche d'adaptation de service dans les trames de données de couches de trajets comprend :
l'encapsulation des trames de données de couche d'adaptation de service avec le même type de service et/ou la même adresse de destination et/ou la même priorité dans une trame de données de couche de trajet.

3. Procédé selon la revendication 2, dans lequel le type de service de la trame de données de couche d'adaptation de service comprend : un service de bande passante fixe, FB, un service de bande passante garantie, AB, et un service au mieux, BE, et
en correspondance, la trame de données de couche de trajet obtenue après l'encapsulation des trames de données de couche d'adaptation de service du même type de service comprend : une trame de données de bande passante fixe FB, une trame de données de bande passante garantie AB et une trame de données BE.

4. Procédé selon la revendication 1, dans lequel le procédé comprend en outre, avant l'encapsulation supplémentaire (S205), des trames de données de couches de trajets pour obtenir les trames de données de couche physique en fonction du nombre de trames de données de couches de trajets et des emplacements des tranches de temps occupées par les trames de données de couches de trajets :
l'exécution d'un croisement, d'une traversée, d'une radiodiffusion ou d'une diffusion multiple sur les trames de données de couches de trajets au niveau du noeud en cours et
l'abandon ou l'ajout des trames de données de couche d'adaptation de service, et/ou l'exécution d'une commutation locale sur les trames de données de couche d'adaptation de service dans le noeud.

5. Appareil de transmission de service, comprenant :
une unité de contribution (301) configurée pour distinguer les types de services reçus,
pour allouer une identification unique à chaque service, pour mapper les services reçus de différents types en des trames de données de couche d'adaptation de service uniformes, et
pour intégrer les trames de données de couche d'adaptation de service dans des trames de données de couches de trajets, chaque trame de données de couche d'adaptation de service comprenant un champ de longueur de charge utile, un champ d'identification de service, un champ de type trame, un champ de contrôle d'en-tête, une identification de destination et une identification de source d'un service, ainsi qu'une charge utile de données, le champ d'identification de service, l'identification de destination et
l'identification de source du service servant ensemble d'identification unique dans un réseau dans lequel se situe le service pour le service intégré dans la trame de données de couche d'adaptation de service,
une unité de croisement (302) comprenant une unité de croisement d'ordre élevé pour enveloppe de transmission, T-CONT, configurée pour exécuter un croisement, une traversée, une radiodiffusion ou une diffusion multiple sur les trames de données de couches de trajets, et
une unité de ligne (303) configurée pour récupérer le nombre de trames de données de couches de trajets et des emplacements des tranches de temps occupées par les trames de données de couches de trajets en fonction des informations d'allocation de bande passante reçues, et pour intégrer les trames de données de couches de trajets dans les trames de données de couche physique en fonction du nombre de tranches de données de couches de trajets et des emplacements des tranches de temps occupées par les trames de données de couches de trajets, pour finir ou régénérer des charges de service des trames de données de couche physique et pour transmettre les trames de données de couche physique, chacune des trames de données de couche physique comprenant une charge de service de couche physique et des trames de données qui sont formées par une pluralité de trames de données de couches de trajets.

6. Appareil selon la revendication 5, comprenant en outre :
une unité de croisement d'ordre faible, située dans l'unité de contribution (301) ou dans l'unité de croisement (302) et configurée pour exécuter une commutation locale sur les trames de données de couche d'adaptation de service dans l'appareil.

7. Appareil selon la revendication 5, comprenant en outre :
une unité d'allocation dynamique de bande passante, DBA, configurée pour recevoir une demande de bande passante signalée et pour ajuster la bande passante des trames de données de couches de trajets en fonction du type de service et/ou de la priorité du service transporté par les trames de données de couches de trajets.

8. Appareil selon la revendication 5, dans lequel l'unité de contribution (301) comprend en outre :
une interface de contribution à un réseau optique passif, PON, configurée pour recevoir un service de réseau PON, et
une interface de service de liaison montante, configurée pour effectuer une transmission de service avec un réseau de couches supérieures.
